# EUROPEAN PATENT APPLICATION

(11) **EP 4 529 127 A1**
(43) Date of publication of application: **26.03.2025**
(21) Application number: 23829414.4
(22) Date of filing: 17.02.2023
(51) Int. Cl.: H04L 49/201

(54) **MULTICAST INFORMATION FORWARDING METHOD, APPARATUS, MULTICAST INFORMATION CONVERGENCE NODE AND MEDIUM**

(30) Priority: 27.06.2022 CN 202210741446
(71) Applicant: ZTE Corporation, Shenzhen, Guangdong 518057 (CN)
(72) Inventor: XU, Benchong, Shenzhen, Guangdong 518057 (CN); ZHANG, Zheng, Shenzhen, Guangdong 518057 (CN); ZHANG, Kai, Shenzhen, Guangdong 518057 (CN)
(74) Representative: Aipex B.V.
(86) International application number: PCT/CN2023/076670
(87) International publication number: WO 2024/001221

(57) **Abstract**

Provided are a multicast information forwarding method and apparatus, a multicast information aggregation node, and a medium. The multicast information forwarding method includes receiving (S110) first aggregation information sent by a multicast source and second aggregation information sent by a multicast user, where the first aggregation information includes multicast source information and Bit Index Explicit Replication (BIER) information of a network on the multicast source side, and the second aggregation information includes multicast user information and BIER information of a network on the multicast user side; creating (S120) a Bit Forwarding Egress Router (BFER) list of a BFER of a BIER sub-domain according to the first aggregation information and the second aggregation information and selecting a Bit Forwarding Ingress Router (BFIR) node of the BIER sub-domain; and distributing (S130) the BFER list and the multicast source information to one of the following: the BFIR node, a multicast source server supporting BIER encapsulation, or a multicast-source-server-directly-connected device supporting BIER encapsulation to enable one of the following to encapsulate a BIER header according to the BFER list and forward the multicast source information to the multicast user: the BFIR node, the multicast source server supporting BIER encapsulation, or the multicast-source-server-directly-connected device supporting BIER encapsulation.

## Description

### TECHNICAL FIELD

The present application relates to the field of network technology, for example, a multicast information forwarding method and apparatus, a multicast information aggregation node, and a medium.

### BACKGROUND

Bit Index Explicit Replication (BIER) is a new multicast technology based on bit index explicit replication. Unlike the Protocol Independent Multicast (PIM) protocol in the related art, BIER provides a stateless multicast forwarding mechanism. In BIER, a multicast ingress node (BIER Ingress) determines multicast receiver (BIER Egress) information, and an intermediate node is not required to maintain any multicast flow forwarding state information. A BFIR is the BIER router closest to the multicast source. A BIER local forwarding table is calculated and generated based on the BIER link-state database of the Interior Gateway Protocol (IGP). The BIER link-state database is generated by flooding of BIER extensions of the IGP. BIER multicast is well suited for deployment scenarios involving large-scale multicast services such as multicast Virtual Private Network (VPN) services and Internet Protocol Television/Over The Top (IPTV/OTT) services. A BIER multicast element carries key information such as a BFR-id, a sub-domain (SD), a bit string length (BSL), and encapsulation by using a BFR-prefix. The BFR-prefix is used for network-wide flooding by using the IGP in the related art. Each BIER router on the network establishes a BIER forwarding table by using the key information to enable forwarding of a BIER-encapsulated packet.

In BIER, when a multicast service is forwarded, a BIER ingress node is required to learn a BFER list for the multicast traffic to enable bit string construction and BIER header encapsulation. Standard extension includes two parts. One part is extension of multicast protocols in the related art, including addition of BIER tunnel types to Mobile Virtual Private Network/Ethernet Virtual Private Network (MVPN/EVPN), addition of BIER join information to PIM, and addition of BIER extension fields to Internet Group Management Protocol/Multicast Listener Discovery (IGMP/MLD). The other part is extension of the Path Computation Element (PCE) protocol, carrying BIER information. This method lacks universality and requires BIER edge devices in the network to have particular capabilities.

### SUMMARY

The present application provides a multicast information forwarding method and apparatus, a multicast information aggregation node, and a medium.

In a first aspect, an embodiment of the present application provides a multicast information forwarding method. The method is applied to a multicast information aggregation node.

The method includes receiving first aggregation information sent by a multicast source and second aggregation information sent by a multicast user, where the first aggregation information includes multicast source information and Bit Index Explicit Replication (BIER) information of a network on the multicast source side, and the second aggregation information includes multicast user information and BIER information of a network on the multicast user side; creating a Bit Forwarding Egress Router (BFER) list of a BFER of a BIER sub-domain according to the first aggregation information and the second aggregation information and selecting a Bit Forwarding Ingress Router (BFIR) node of the BIER sub-domain; and distributing the BFER list and the multicast source information to one of the following: the BFIR node, a multicast source server supporting BIER encapsulation, or a multicast-source-server-directly-connected device supporting BIER encapsulation to enable one of the following to encapsulate a BIER header according to the BFER list and forward the multicast source information to the multicast user: the BFIR node, the multicast source server supporting BIER encapsulation, or the multicast-source-server-directly-connected device supporting BIER encapsulation.

In a second aspect, an embodiment of the present application provides a multicast information forwarding apparatus. The apparatus includes a receiving module, a creation module, and a forwarding module.

The receiving module is configured to receive first aggregation information sent by a multicast source and second aggregation information sent by a multicast user. The first aggregation information includes multicast source information and Bit Index Explicit Replication (BIER) information of a network on the multicast source side. The second aggregation information includes multicast user information and BIER information of a network on the multicast user side.

The creation module is configured to create a Bit Forwarding Egress Router (BFER) list of a BFER of a BIER sub-domain according to the first aggregation information and the second aggregation information and select a Bit Forwarding Ingress Router (BFIR) node of the BIER sub-domain.

The forwarding module is configured to distribute the BFER list and the multicast source information to one of the following: the BFIR node, a multicast source server supporting BIER encapsulation, or a multicast-source-server-directly-connected device supporting BIER encapsulation to enable one of the following to encapsulate a BIER header according to the BFER list and forward the multicast source information to the multicast user: the BFIR node, the multicast source server supporting BIER encapsulation, or the multicast-source-server-directly-connected device supporting BIER encapsulation.

In a third aspect, an embodiment of the present application provides a multicast information aggregation node. The multicast information aggregation node includes one or more processors; and a storage apparatus configured to store one or more programs.

When executed by the one or more processors, the one or more programs cause the one or more processors to perform the method of any embodiment of the present application.

In a fourth aspect, an embodiment of the present application provides a storage medium storing a computer program which, when executed by a processor, causes the processor to perform the method of any embodiment of the present application.

### BRIEF DESCRIPTION OF DRAWINGS

FIG. 1 is a flowchart of a multicast information forwarding method according to an embodiment of the present application.
FIG. 2 is a topology diagram of a multicast video network according to an embodiment of the present application.
FIG. 3 is a topology diagram illustrating that a multicast source and a multicast user announce information to a multicast information aggregation node by using a direct node according to an embodiment of the present application.
FIG. 4 is a topology diagram illustrating that a multicast source and a multicast user directly announce information to a multicast information aggregation node according to an embodiment of the present application.
FIG. 5 is a topology diagram illustrating that a multicast source and a multicast user announce information to a multicast information aggregation node by using a BIER border node according to an embodiment of the present application.
FIG. 6 is a topology diagram illustrating that multiple multicast information aggregation nodes are deployed in a BIER sub-domain according to an embodiment of the present application.
FIG. 7 is a topology diagram illustrating that a multicast information aggregation node is deployed in multiple BIER sub-domains according to an embodiment of the present application.
FIG. 8 is a diagram illustrating the structure of a multicast information forwarding apparatus according to an embodiment of the present application.
FIG. 9 is a diagram illustrating the structure of a multicast information aggregation node according to an embodiment of the present application.

### DETAILED DESCRIPTION

The steps illustrated in the flowcharts among the drawings may be performed by, for example, a computer system capable of executing a set of computer-executable instructions. Moreover, though logical sequences are illustrated in the flowcharts, the steps illustrated or described may be performed in sequences different from those described herein in some cases.

Hereinafter the present application is further described in detail in conjunction with the drawings and embodiments.

Multicast refers to the delivery of multicast data packets (typically including data packets of information that identifies the multicast group, such as a multicast group address) from a multicast source to multiple multicast users without placing a heavy burden on the source. As used herein, a multicast user refers to a host (for example, a computing device or application) that has subscribed to the multicast group. In multicast technology, instead of the multicast source replicating the multicast data packets and sending copies of the data packets to each recipient, the multicast source sends a single copy of the multicast data packets, and multicast-enabled routers replicate the packet at one or more points where the paths to various multicast users diverge.

Network protocol (Internet Protocol, IP) multicast technology enables efficient point-to-multipoint data transmission over IP networks, which effectively saves network bandwidth and reduces network load. Therefore, it has widespread applications in areas such as real-time data transmission, multimedia conferencing, data copying, interactive Internet Protocol Television (IPTV), gaming, and simulation and so on. This multicast technology uses multicast protocols to build a multicast tree of the control plane, and then uses multicast tree to build a logical tree of the network plane to achieve point-to-multipoint data forwarding. This distribution tree-building-based multicast approach requires intermediate nodes to maintain complex multicast forwarding state information. As network scale grows and multicast traffic increases, this multicast technology faces rising costs and operational challenges.

To address this, the industry has proposed a new technology for constructing multicast data forwarding paths, known as BIER (Bit Index Explicit Replication) technology. This technology introduces a multicast technology architecture that does not require the construction of a multicast distribution tree. A router that supports BIER technology is referred to as a Bit-forwarding Router (BFR), which can receive and forward BIER message. A multicast forwarding domain composed of one or more BFRs is called a BIER domain. At the entry of a BIER domain, a BFR that performs BIER encapsulation on an original multicast data packet is referred to as a BIER Forwarding Ingress Router (BFIR). At the exit of a BIER domain, a BFR that performs decapsulation of the original multicast data packet from the BIER packets is referred to as a BIER Forwarding Egress Router (BFER). It should be understood that a BFIR and a BFER in the BIER domain can be referred to as edge BFRs in the BIER domain.

In a BIER domain, the edge BFR can be assigned a globally unique bit position identifier within the entire BIER sub-domain (SD). For example, each edge BFR can be assigned a value as a BFR identifier (BFR ID), such as a number between 1 and 256. All BFR IDs in the BIER domain together form a bit string. When the original multicast data packet (also referred to as a BIER message) is transmitted in the BIER domain, it requires additional encapsulation with a specific BIER header. In the BIER header, all destination nodes for the original multicast data packet are marked in the form of a bit string. For example, the format of the encapsulated multicast data packet is: BIER header + original multicast data packet. BFRs in the BIER domain can forward packets based on the bit index forwarding table (BIFT) and the bit string carried in the BIER header, ensuring that the original multicast data packet is sent to all destination addresses. In BIER technology, the receiver information is attached to the packet in the form of bits, and the packet is forwarded based on this receiver information. BIER encapsulates each multicast message with a BIER message header, and the BIER multicast recipient information is encapsulated in the BIER message header. A BIER router forwards the BIER multicast message based on the information in the BIER header, without maintaining each multicast forwarding state information. BIER encapsulation isolates specific multicast services from the network layer, so the P router on the network no longer needs to maintain forwarding states for each multicast group on each VPN. The BIER router is completely unaware of the upper-layer multicast services, achieving stateless multicast forwarding by the P router. The stateless nature of BIER multicast eliminates the pressure on the network for large-scale deployment of multicast services.

To facilitate understanding, the fields in the BIER header are described in detail as follows: (1) BIFT ID: Length of 20 bits, which is a label (L) in BIER-multi protocol label switching (MPLS) encapsulation. The BIFT ID may be a BIFT-id and may include a combination of sub-domain (SD), Bit String Length (BSL), and Set Identifier (SI). Different BIFT IDs may correspond to different combinations of SD/BSL/SI. 1. Sub-domain (SD): A BIER domain may be configured into different sub-domains (SD) based on actual service needs. Each sub-domain is represented by a sub-domain Identifier (SD-ID). For example, the value range of SD-ID is [0-255], with a length of 8 bits. For instance, the BIER domain may be configured into different SDs according to the service, such as differences between virtual private networks (VPNs), and different VPNs are configured to use different SDs. For example, VPN 1 uses SD 0, and VPN 2 uses SD 1. Multiple VPNs may also use the same SD, and different SDs in a BIER domain may be within the same Interior Gateway Protocol (IGP) process or topology, or in different IGP processes or topologies. 2. Bit String Length (BSL): BSL is the length of the bit string included in the BIER header. BSL may vary. The minimum BSL is 64 bits, and the values may be 128 bits, 256 bits, 512 bits, 1024 bits, 2048 bits, with the maximum BSL being 4096 bits. Specifically, the length is indicated in the message by 4 bits. For example, when BSL is 64 bits, it is indicated as 0001 in the message; when BSL is 128 bits, it is indicated as 0010; when BSL is 512 bits, it is indicated as 0100; and so on. 3. Set Index (SI): SI may be understood as a collection of multiple edge BFRs or configured BFR IDs in the network. For example, if BSL is 256 bits, but there are more than 256 edge BFRs or more than 256 configured BFR IDs, these edge BFRs or BFR IDs need to be divided into different sets. For instance, BFR IDs from 1 to 256 constitute set 0, and BFR IDs from 257 to 512 constitute set 1. After receiving a BIER message, a BFR in the BIER domain may determine which SD the BIER message belongs to, which BSL is used, and which set of SI the message belongs to based on the BIFT ID in the BIER header, where the SI corresponds to the BSL. (2) Bit String: Each bit in the bit string is used to identify an edge BFR. For example, the lowest bit (the rightmost bit) in the bit string identifies BFER with BFR-ID = 1; the second bit from the right identifies BFER with BFR-ID = 2. The forwarding table entry used for forwarding by forwarding Plane is based on the bit string in the message to determine which BFERs the message should be sent to. When a BFR in the BIER domain receives a message with a BIER header, it forwards the BIER message based on the bit string and BIFT ID in the BIER header. (3) The proto field: When the proto field equals 4, it indicates that the original multicast data packet following the BIER header is an IPv4 packet. When the proto field equals 6, it indicates that the original multicast data packet following the BIER header is an IPv6 packet.

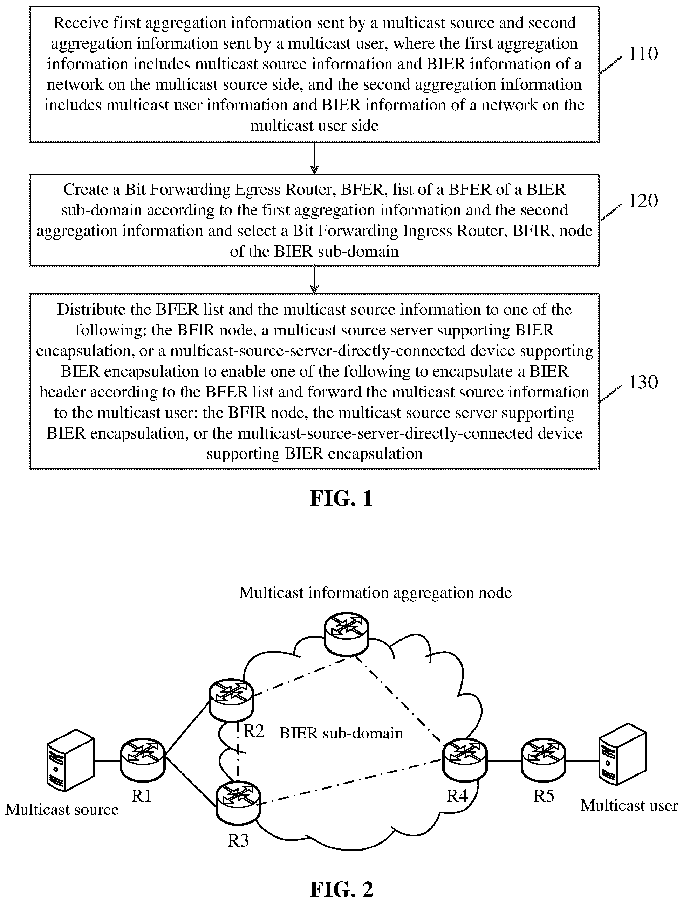

In an example embodiment, FIG. 1 is a flowchart of a multicast information forwarding method according to an embodiment of the present application. The method is applicable to multicast information forwarding scenarios and can be executed by a multicast information forwarding apparatus. The multicast information forwarding apparatus may be implemented by software and/or hardware and is integrated in a multicast information aggregation node. The multicast information aggregation node is deployed in a BIER sub-domain. As shown in FIG. 1, the multicast information forwarding method of this embodiment of the present application includes the following:

In S110, first aggregation information sent by a multicast source and second aggregation information sent by a multicast user are received, where the first aggregation information includes multicast source information and BIER information of a network on the multicast source side, and the second aggregation information includes multicast user information and BIER information of a network on the multicast user side.

In an embodiment of the present application, the multicast information aggregation node may be deployed in the BIER sub-domain. For example, a single multicast information aggregation node may be deployed in a single BIER sub-domain, multiple multicast information aggregation nodes may be deployed in a single BIER sub-domain, or one or more multicast information aggregation nodes may be deployed across multiple BIER sub-domains.

In an embodiment, receiving the first aggregation information sent by the multicast source and the second aggregation information sent by the multicast user includes, in response to determining that one multicast information aggregation node is deployed in the BIER sub-domain, receiving, by a target aggregation node, the first aggregation information and the second aggregation information separately, where the one multicast information aggregation node serves as the target aggregation node; or in response to determining that multiple multicast information aggregation nodes are deployed in the BIER sub-domain, receiving, by a target aggregation node, the first aggregation information and the second aggregation information separately, where one of the multicast information aggregation nodes serves as the target aggregation node. A network device in the BIER sub-domain communicates using one of the following: Quick UDP Internet Connections (QUIC), Transmission Control Protocol (TCP), or User Datagram Protocol (UDP).

In an embodiment, the multicast information forwarding method also includes, in response to determining that the target multicast information aggregation node receives the first aggregation information and the second aggregation information forwarded by the first multicast information aggregation node, parsing, by the target multicast information aggregation node, the first aggregation information and the second aggregation information to obtain a multicast information aggregation node identifier in the first aggregation information and a multicast information aggregation node identifier in the second aggregation information; performing, by the target multicast information aggregation node, a path check on the first aggregation information and the second aggregation information separately according to the multicast information aggregation node identifier in the first aggregation information and the multicast information aggregation node identifier in the second aggregation information; and in response to determining that the first aggregation information and the second aggregation information pass the path check, forwarding the first aggregation information and the second aggregation information to multicast information aggregation nodes in the BIER sub-domain other than the target multicast information aggregation node and the first multicast information aggregation node.

In an embodiment, the multicast information aggregation node may also send the multicast source information and a BFER selected for a particular user to the particular user or a directly connected device of the particular user to enable the particular user or the directly connected device of the particular user to send multicast information of Protocol Independent Multicast (PIM) or Internet Group Management Protocol (IGMP) to the BFER.

FIG. 2 is a topology diagram of a multicast video network according to an embodiment of the present application. As shown in FIG. 2, the topology includes a multicast source, a multicast user, and a BIER sub-domain. A multicast information aggregation node may be deployed in the BIER sub-domain and identified by IPv4/IPv6. A UDP port number may be designated for aggregating multicast information. Deployment may be carried out through various methods such as configuration specification or network management distribution. A Quick UDP Internet Connection (QUIC) session is established between the devices in the network and the multicast information aggregation node. QUIC is used for data transmission, ensuring reliability and security.

In S120, a Bit Forwarding Egress Router (BFER) list of a BFER of a BIER sub-domain is created according to the first aggregation information and the second aggregation information, and a Bit Forwarding Ingress Router (BFIR) node of the BIER sub-domain is selected.

In this step, the multicast information aggregation node may create the BFER list of the BIER sub-domain according to the first aggregation information and the second aggregation information and select the BFIR node of the BIER sub-domain. In an embodiment, the multicast information aggregation node may extract to-be-matched content from the multicast source information and the multicast user information separately, where the to-be-matched content includes at least one of the following: a multicast instance, a multicast source address, a multicast group address, or a video bitrate; and match the multicast source information with the multicast user information according to the to-be-matched content in the multicast source information and the to-be-matched content in the multicast user information and create the BFER list according to a match result. The multicast source information of this embodiment includes a multicast instance identifier, a multicast source address, a multicast group address, or a video bitrate. The BIER information of the network on the multicast source side is a first BIER information list. The first BIER information list includes one or more BIER entries. Each of the one or more BIER entries includes a keyword of the BIER sub-domain, a Bfr prefix, a Bfr-id, the BIER encapsulation capability of the multicast source, or a unicast metric from a BIER device in the BIER sub-domain to the multicast source. Additionally, each BIER entry may also include a Maximum Transmission Unit (MTU).

The multicast user information of this embodiment includes a Virtual Private Network (VPN) identifier, a multicast group address, a multicast source address, and a video bitrate. The BIER information of the network on the multicast user side is a second BIER information list. The second BIER information list includes one or more BIER entries. Each of the one or more BIER entries includes the BIER sub-domain, a Bfr prefix, or a Bfr-id.

In an embodiment, creating the BFER list according to the match result includes, in response to determining that the multicast source and the multicast user belong to the same BIER sub-domain, creating the BFER list in the same BIER sub-domain; or in response to determining that the multicast source and the multicast user belong to different BIER sub-domains, creating the BFER list in the different BIER sub-domains. That is, once the multicast source information and multicast user information are matched, the BIER information is selected. The multicast traffic is then forwarded using the same BIER SD for both the multicast source and multicast user. If the multicast source is associated with multiple BIER SDs and the multicast users belong to different BIER SDs, then the multicast source should forward the traffic to multiple BIER SDs accordingly. After selecting the BIER SD, the BFER list is constructed based on the BIER information of the multicast user. Additionally, the BIER Forwarding Ingress Router (BFIR) is required to be determined. If the multicast source and multicast user belong to different BIER SDs, the same multicast flow can be routed through multiple BFIRs.

The basic principle of BIER is simple and efficient. Each BIER router is assigned a unique unsigned integer known as a BFR-id, which uniquely identifies the router. Each BIER router floods important information in the IGP (Interior Gateway Protocol) using a specific prefix (BFR-prefix), which includes the BFR-id, SD, BSL, encapsulation type, or BFIT-ID and so on. In a large BIER sub-domain, multiple Sub-domains (SDs) can be designed based on network topology or geographical location to simplify management. For instance, a nationwide operator might establish regional SD networks such as eastern grand region SD, western grand region SD, southern grand region SD, and northern grand region SD. Alternatively, there can be just a single SD by default. Within each SD, BSL and BFR-id are independent and do not affect each other.

The BIER three-layer architecture design consists of the following layers: Overlay layer, BIER layer, and Underlay layer.
1. Overlay layer: The Overlay layer is responsible for multicast service control plane information exchange. This includes user multicast join and leave operations between BIER Egress and BIER Ingress nodes, as well as the encapsulation, decapsulation, and forwarding of multicast flows entering and leaving the BIER domain. The Overlay layer may be implemented using methods such as SDN, MP-BGP (MVPN), PIM, BMLD (BIER extension of MLD protocol), or static configuration, with MP-BGP and SDN being the most common.
2. BIER layer: The BIER layer primarily handles the publishing and flooding of BIER routing information, and calculates and updates the local BIER forwarding table. Based on the BIER forwarding table, the BIER layer forwards BIER messages, with each forwarding node performing encapsulation and re-encapsulation of BIER messages. The BIER messages header is decapsulated to obtain key information such as BFIT-ID and Bit string. BFIT-ID is an index for the router to locate the BIER forwarding table, and Bit string is the key value for querying the BIER forwarding table. The BIER node re-encapsulates the BIER message header based on the forwarding table results and forwards the BIER message. If the node is a multicast replication point, it will have multiple different query values, with each value representing that the node will replicate and re-encapsulate a new BIER message header and forward a message. A BIER router may have multiple BIER forwarding tables, each with multiple entries. Each BIER forwarding table is associated with a BFIT-ID, which is generated by encoding and hashing SD, SI, and BSL. The BIER forwarding table entry primarily consists of a string of bit codes (referred to as Forwarding Bit Mask, F-BM, in standard RFC8296) and a neighboring node. Each string of F-BM represents the combination of optimal paths to reach other BIER nodes via the neighboring node.
3. Underlay layer: The Underlay layer corresponds to the link-state routing protocol layer in related technologies. Through link-state protocols such as ISIS or OSPF, the underlay layer extends TLV attributes to carry BIER information. Consequently, BIER inherits many features of ISIS and OSPF protocols, such as support for FRR, load balancing, and synchronization of BIER forwarding table convergence with ISIS or OSPF protocol convergence, achieving convergence speeds in the millisecond range.

In S130, the BFER list and the multicast source information are distributed to one of the following: the BFIR node, a multicast source server supporting BIER encapsulation, or a multicast-source-server-directly-connected device supporting BIER encapsulation to enable one of the following to encapsulate a BIER header according to the BFER list and forward the multicast source information to the multicast user: the BFIR node, the multicast source server supporting BIER encapsulation, or the multicast-source-server-directly-connected device supporting BIER encapsulation.

In this step, the multicast information aggregation node may distribute the BFER list and multicast source information to the BFIR node, multicast source server supporting BIER encapsulation, or multicast-source-server-directly-connected device supporting BIER encapsulation. This enables the BFIR node, multicast source server supporting BIER encapsulation, or multicast-source-server-directly-connected device supporting BIER encapsulation to encapsulate the BIER header according to the BFER list and forward the multicast source information to the multicast user. As shown in FIG. 2, the multicast information aggregation node may distribute the BFER list and multicast source information to router R2, enabling router R2 to forward the multicast source information to the multicast user according to the BFER list. In an embodiment, after router R2 receives the multicast source information, it constructs a BIER header and sends the multicast source information into the BIER network. If the BFIR is not a device directly connected to the multicast source and has not yet joined the multicast group, the BFIR is required to join the multicast group to introduce the multicast source information into the BFIR.

In an embodiment, the multicast information aggregation node may use TCP or UDP instead of QUIC for communication.

In an embodiment, the multicast information aggregation node sends control information to each device in the network through BIER.

In an embodiment, the multicast information aggregation node is responsible for authenticating devices in the network. Only authenticated multicast sources and multicast users are allowed to access the network, thereby enhancing network security.

The multicast information forwarding method according to this embodiment of the present application includes the following: The multicast information aggregation node receives the first aggregation information sent by the multicast source and the second aggregation information sent by the multicast user; creates a BFER list of the BIER sub-domain according to the first aggregation information and the second aggregation information and selects a BFIR node of the BIER sub-domain; and then distributes the BFER list and multicast source information to the BFIR node, enabling the BFIR node to forward the multicast source information to the multicast user according to the BFER list. In other words, the present application can deploy a multicast information aggregation node in the BIER sub-domain. Through this node, multicast source information can be forwarded to the multicast user without the need to extend the multicast protocol and PCE protocol used in the related art. In the related art, BIER implementation of multicast service forwarding requires extending the multicast protocol and PCE protocol. Therefore, the multicast information forwarding method proposed in the present application can collect multicast information based on a general transmission protocol without imposing requirements on BIER edge nodes, making it more scalable. Moreover, the technical solution of the present application is simple and convenient to implement, easy to popularize, and has a wider application range.

### Embodiment one

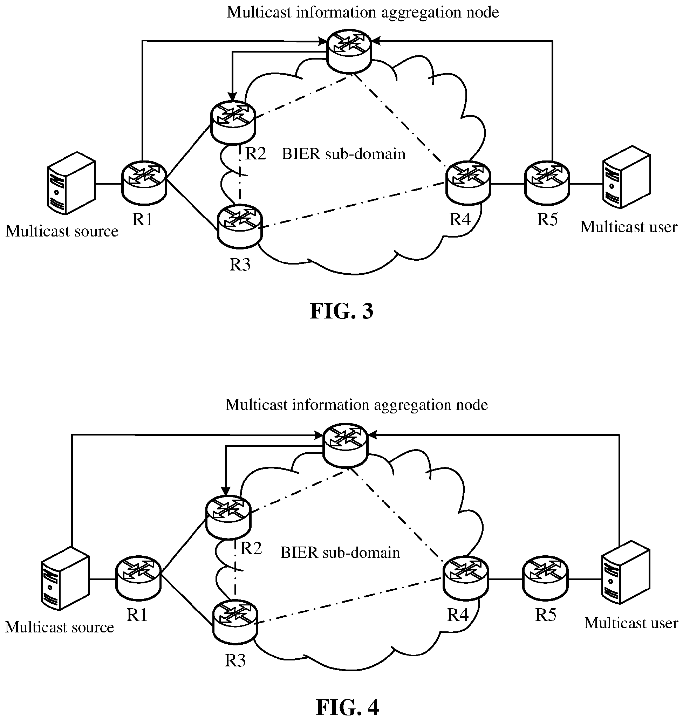

FIG. 3 is a topology diagram illustrating that a multicast source and a multicast user announce information to a multicast information aggregation node by using a direct node according to an embodiment of the present application. As shown in FIG. 3, router R1 is directly connected to the multicast source, making router R1 a direct node of the multicast source; router R5 is directly connected to the multicast user, making router R5 a direct node of the multicast user. The multicast source can send the first aggregation information to the multicast information aggregation node via router R1. The multicast user can send the second aggregation information to the multicast information aggregation node via router R5. The first aggregation information in this embodiment of the present application may include multicast source information and BIER information from the network on the multicast source side. The second aggregation information may include multicast user information and BIER information from the network on the multicast user side.

### Embodiment two

FIG. 4 is a topology diagram illustrating that a multicast source and a multicast user directly announce information to a multicast information aggregation node according to an embodiment of the present application. As shown in FIG. 4, the multicast source has BIER encapsulation capabilities and may directly send the first aggregation information to the multicast information aggregation node; the multicast user may directly send the second aggregation information to the multicast information aggregation node. The first aggregation information in this embodiment of the present application may include multicast source information and BIER information of the network on the multicast source side. The second aggregation information may include multicast user information and BIER information of the network on the multicast user side. BIER message formats: IETF defines three types of BIER message encapsulation, including MPLS encapsulation, non-MPLS Ethernet encapsulation, and IPv6 encapsulation, to satisfy different network requirements. Different encapsulation types of BIER all have a common BIER message header. Multicast messages entering the BIER Ingress node are encapsulated with a BIER header. Multicast messages leaving the BIER Egress node are decapsulated to restore the multicast messages.

In this embodiment, the multicast information aggregation node may send the BFER list and the selected BFIR to router R2, enabling router R2 to forward the multicast source information to the multicast user based on the BFER list. Additionally, the multicast information aggregation node may also send the BFER list and the selected BFIR, along with the corresponding multicast source information and the BIER capabilities of the BFIR (such as encapsulation type, BSL and son on), to the multicast source. The multicast source encapsulates the BIER header and directly sends it to the BFIR via BIER encapsulation, and the BFIR then continues with BIER forwarding.

### Embodiment three

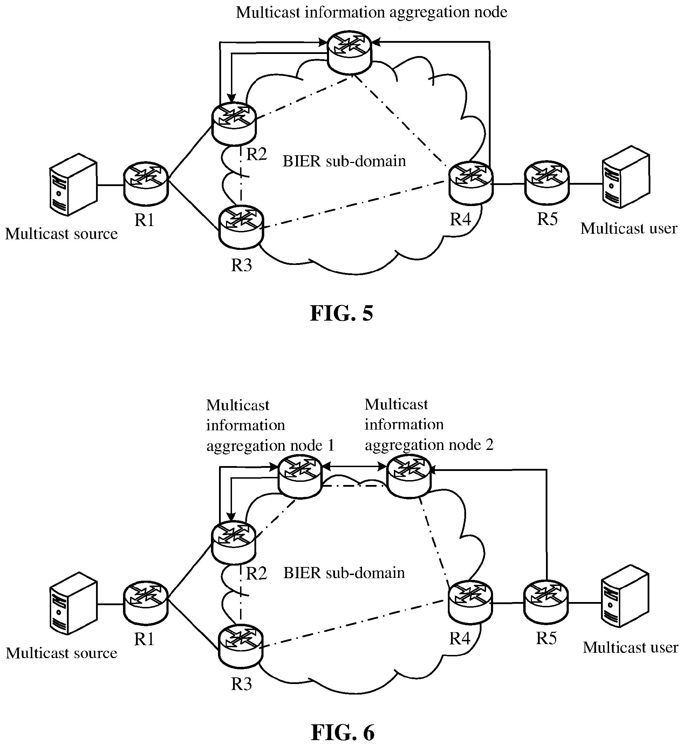

FIG. 5 is a topology diagram illustrating that a multicast source and a multicast user announce information to a multicast information aggregation node by using a BIER border node according to an embodiment of the present application. As shown in FIG. 5, router R2 and router R3 are border nodes of the network on the multicast source side, and the multicast source may send the first aggregation information to the multicast information aggregation node through router R2. Similarly, router R4 is a border node of the network on the multicast user side, and the multicast user may send the second aggregation information to the multicast information aggregation node through router R4. In this embodiment, the first aggregation information may include multicast source information and BIER information of the network on the multicast source side; and the second aggregation information may include multicast user information and BIER information of the network on the multicast user side.

### Embodiment four

FIG. 6 is a topology diagram illustrating that multiple multicast information aggregation nodes are deployed in a BIER sub-domain according to an embodiment of the present application. As shown in FIG. 6, the BIER domain is deployed with two multicast information aggregation nodes: Multicast Information Aggregation Node 1 and Multicast Information Aggregation Node 2. A QUIC session is established between the multicast information aggregation nodes, where the session requires tagging to identify each other as multicast information aggregation nodes. In the topology shown in FIG. 6, the multicast source may choose to send the first aggregation information to either of the multicast information aggregation nodes, and the multicast user may also choose to send the second aggregation information to either of the multicast information aggregation nodes. Suppose that the multicast source and the multicast user choose to send the first and second aggregation information to Multicast Information Aggregation Node 1. After receiving this, Multicast Information Aggregation Node 1 marks it as locally created, adds its own identifier (IPv4 or IPv6 address) to the message, and then forwards it to other multicast information aggregation nodes. Upon receiving it, other multicast information aggregation nodes (in FIG. 6, Multicast Information Aggregation Node 2) perform a path check according to the multicast information aggregation node identifier in the message. After passing the check, Multicast Information Aggregation Node 2 accepts the message and forwards it to multicast information aggregation nodes other than Multicast Information Aggregation Node 1 and Multicast Information Aggregation Node 2.

In an embodiment, the method for path checking may include the following: 1. If a multicast information aggregation node's QUIC session includes only one other multicast information aggregation node, no checking is required. 2. If a multicast information aggregation node's QUIC session includes multiple multicast information aggregation nodes, it can check the unicast route's remote next hop by looking up the IP address of the multicast information aggregation node. If the remote next hop is a neighbor of the multicast information aggregation node, it accepts the message. If the remote next hop is not a neighbor, it does not accept the message. 3. It is decided whether to accept the message based on a preset local policy. In the topology shown in FIG. 6, the multicast information aggregation node closest to the multicast source is responsible for creating the BFER list for the BIER domain and selecting the BFIR nodes for the BIER domain.

### Embodiment five

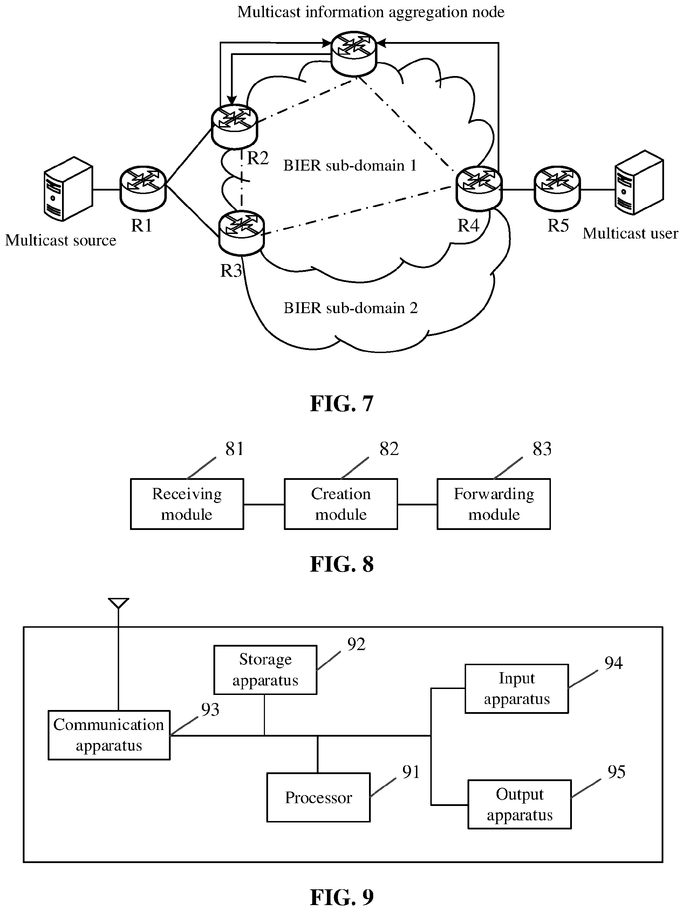

FIG. 7 is a topology diagram illustrating that a multicast information aggregation node is deployed in multiple BIER sub-domains according to an embodiment of the present application. As shown in FIG. 7, the topology may include two BIER domains: BIER domain 1 and BIER domain 2. BIER domain 1 and BIER domain 2 may be deployed with the same multicast information aggregation node. The multicast information aggregation node may forward multicast source information in both BIER domain 1 and BIER domain 2.

This embodiment of the present application aggregates multicast information and BIER information via QUIC. First, one or more multicast information aggregation nodes are deployed in the network. Devices in the network use QUIC to communicate with the multicast information aggregation nodes, which authenticate the multicast source and multicast user. The multicast source or network devices on the multicast source side send multicast source information to the multicast information aggregation node. The multicast user or a network device on the multicast user side sends multicast user information to the multicast information aggregation node. The aggregation node creates a BFER list and selects a BFIR node based on this information and then sends the BFER list to the BFIR node or directly to the multicast source. This embodiment of the present application uses a general-purpose transport protocol to report and deliver multicast and BIER information, enabling multicasts and BIER deployments across various scenarios.

In an example embodiment, an embodiment of the present application provides a multicast information forwarding apparatus. FIG. 8 is a diagram illustrating the structure of a multicast information forwarding apparatus according to an embodiment of the present application. The apparatus is integrated in a multicast information aggregation node. As shown in FIG. 8, the apparatus includes a receiving module 81, a creation module 82, and a forwarding module 83.

The receiving module 81 is configured to receive first aggregation information sent by a multicast source and second aggregation information sent by a multicast user, where the first aggregation information includes multicast source information and Bit Index Explicit Replication (BIER) information of a network on the multicast source side, and the second aggregation information includes multicast user information and BIER information of a network on the multicast user side.

The creation module 82 is configured to create a Bit Forwarding Egress Router (BFER) list of a BFER of a BIER sub-domain according to the first aggregation information and the second aggregation information and select a Bit Forwarding Ingress Router (BFIR) node of the BIER sub-domain.

The forwarding module 83 is configured to distribute the BFER list and the multicast source information to one of the following: the BFIR node, a multicast source server supporting BIER encapsulation, or a multicast-source-server-directly-connected device supporting BIER encapsulation to enable one of the following to encapsulate a BIER header according to the BFER list and forward the multicast source information to the multicast user: the BFIR node, the multicast source server supporting BIER encapsulation, or the multicast-source-server-directly-connected device supporting BIER encapsulation.

In an embodiment, the receiving module 81 is configured to, in response to determining that one multicast information aggregation node is deployed in the BIER sub-domain, receive, by a target aggregation node, the first aggregation information and the second aggregation information separately, where the one multicast information aggregation node serves as the target aggregation node; or in response to determining that multiple multicast information aggregation nodes are deployed in the BIER sub-domain, receive, by a target aggregation node, the first aggregation information and the second aggregation information separately, where one of the multicast information aggregation nodes serves as the target aggregation node. A network device in the BIER sub-domain communicates using one of the following: Quick UDP Internet Connections (QUIC), Transmission Control Protocol (TCP), or User Datagram Protocol (UDP).

In an embodiment, the receiving module 81 is configured to, in response to determining that the target multicast information aggregation node receives the first aggregation information and the second aggregation information forwarded by the first multicast information aggregation node, parse, by the target multicast information aggregation node, the first aggregation information and the second aggregation information to obtain a multicast information aggregation node identifier in the first aggregation information and a multicast information aggregation node identifier in the second aggregation information; perform, by the target multicast information aggregation node, a path check on the first aggregation information and the second aggregation information separately according to the multicast information aggregation node identifier in the first aggregation information and the multicast information aggregation node identifier in the second aggregation information; and in response to determining that the first aggregation information and the second aggregation information pass the path check, forward the first aggregation information and the second aggregation information to multicast information aggregation nodes in the BIER sub-domain other than the target multicast information aggregation node and the first multicast information aggregation node.

In an embodiment, the receiving module 81 is configured to send the multicast source information and a BFER selected for a particular user to the particular user or a directly connected device of the particular user to enable the particular user or the directly connected device of the particular user to send multicast information of Protocol Independent Multicast (PIM) or Internet Group Management Protocol (IGMP) to the BFER.

In an embodiment, the receiving module 81 is configured to receive, by the target aggregation node, the first aggregation information sent by a directly connected node of the multicast source and the second aggregation information sent by a directly connected node of the multicast user.

In an embodiment, the receiving module 81 is configured to receive, by the target aggregation node, the first aggregation information directly sent by the multicast source and the second aggregation information directly sent by the multicast user.

In an embodiment, the receiving module 81 is configured to receive, by the target aggregation node, the first aggregation information sent by a border node of the network on the multicast source side and the second aggregation information sent by a border node of the network on the multicast user side.

In an embodiment, the multicast source information includes a multicast instance identifier, a multicast source address, a multicast group address, and a video bitrate; the BIER information of the network on the multicast source side is a first BIER information list; the first BIER information list includes one or more BIER entries; and each of the one or more BIER entries includes a keyword of the BIER sub-domain, a Bfr prefix, a Bfr-id, a BIER encapsulation capability of the multicast source, or a unicast metric from a BIER device in the BIER sub-domain to the multicast source; and the multicast user information includes a Virtual Private Network (VPN) identifier and a multicast group address; the BIER information of the network on the multicast user side is a second BIER information list; the second BIER information list includes one or more BIER entries; and each of the one or more BIER entries includes the BIER sub-domain, a Bfr prefix, or a Bfr-id.

In an embodiment, the creation module 82 is configured to extract to-be-matched content from the multicast source information and the multicast user information separately, where the to-be-matched content includes at least one of the following: a multicast instance, a multicast source address, a multicast group address, or a video bitrate; and match the multicast source information with the multicast user information according to the to-be-matched content in the multicast source information and the to-be-matched content in the multicast user information and create the BFER list according to a match result.

In an embodiment, the creation module 82 is configured to, in response to determining that the multicast source and the multicast user belong to the same BIER sub-domain, create the BFER list in the same BIER sub-domain; or in response to determining that the multicast source and the multicast user belong to different BIER sub-domains, create the BFER list in the different BIER sub-domains.

An embodiment of the present application provides a multicast information aggregation node. FIG. 9 is a diagram illustrating the structure of a multicast information aggregation node according to an embodiment of the present application. As shown in FIG. 9, the multicast information aggregation node of the present application includes one or more processors 91 and a storage apparatus 92. One or more processors 91 are provided in the multicast information aggregation node. In FIG. 9, one processor 91 is used as an example. The storage apparatus 92 is configured to store one or more programs. When executed by the one or more processors 91, the one or more programs cause the one or more processors 91 to perform the multicast information forwarding method of any embodiment of the present application.

The multicast information aggregation node also includes a communication apparatus 93, an input apparatus 94, and an output apparatus 95.

The processor 91, the storage apparatus 92, the communication apparatus 93, the input apparatus 94, and the output apparatus 95 in the multicast information aggregation node may be connected via a bus or other means, with connection via a bus as an example in FIG. 9.

The input apparatus 94 may be configured to receive inputted digital or character information and generate key signal input related to user settings and function control of the multicast information aggregation node. The output apparatus 95 may include a display device such as a display screen.

The communication apparatus 93 may include a receiver and a sender. The communication apparatus 93 is configured to perform multicast information forwarding under the control of the one or more processors 91.

As a computer-readable storage medium, the storage apparatus 92 may be configured to store software programs, computer-executable programs, and modules such as program instructions/modules corresponding to the multicast information forwarding method described in the embodiments of the present application (for example, the processing module 91 and the sending module 92 in the multicast information forwarding apparatus). The storage apparatus 92 may include a program storage area and a data storage area. The program storage area may store an operating system and an application program required by at least one function. The data storage area may store data created depending on use of a device. Additionally, the storage apparatus 92 may include a high speed random-access memory and may further include a non-volatile memory, such as at least one magnetic disk memory, a flash memory or another non-volatile solid-state memory. In some examples, the storage apparatus 92 may also include memories disposed remote from the processor 91. These remote memories may be connected to a multicast information aggregation node via a network. Examples of the preceding network include, but are not limited to, the Internet, an intranet, a local area network, a mobile communication network and a combination thereof.

An embodiment of the present application provides a storage medium storing a computer program which, when executed by a processor, causes the processor to perform the method of any embodiment of the present application.

For example, a multicast information forwarding method is applied to a multicast information aggregation node.

The method includes receiving first aggregation information sent by a multicast source and second aggregation information sent by a multicast user, wherein the first aggregation information includes multicast source information and Bit Index Explicit Replication (BIER) information of a network on the multicast source side, and the second aggregation information includes multicast user information and BIER information of a network on the multicast user side; creating a Bit Forwarding Egress Router (BFER) list of a BFER of a BIER sub-domain according to the first aggregation information and the second aggregation information and selecting a Bit Forwarding Ingress Router (BFIR) node of the BIER sub-domain; and distributing the BFER list and the multicast source information to one of the following: the BFIR node, a multicast source server supporting BIER encapsulation, or a multicast-source-server-directly-connected device supporting BIER encapsulation to enable one of the following to encapsulate a BIER header according to the BFER list and forward the multicast source information to the multicast user: the BFIR node, the multicast source server supporting BIER encapsulation, or the multicast-source-server-directly-connected device supporting BIER encapsulation.

A computer storage medium in an embodiment of the present application may be one computer-readable medium or any combination of multiple computer-readable media. The computer-readable medium may be a computer-readable signal medium or a computer-readable storage medium. The computer-readable storage medium may be, for example, but is not limited to, an electrical, magnetic, optical, electromagnetic, infrared or semiconductor system, apparatus or device, or any combination thereof. Examples of the computer-readable storage medium (a non-exhaustive list) include an electrical connection having one or more wires, a portable computer disk, a hard disk, a random-access memory (RAM), a read-only memory (ROM), an erasable programmable read-only memory (EPROM), a flash memory, an optical fiber, a portable compact disc read-only memory (CD-ROM), an optical memory, a magnetic memory, or any suitable combination thereof. The computer-readable storage medium may be any tangible medium including or storing a program. The program may be used by or used in conjunction with an instruction execution system, apparatus or device.

The computer-readable signal medium may include a data signal propagated in a baseband or as part of a carrier. The data signal carries computer-readable program codes. The data signal propagated in this manner may be in multiple forms, including, but not limited to, an electromagnetic signal, an optical signal or any suitable combination thereof. The computer-readable signal medium may also be any computer-readable medium other than the computer-readable storage medium. The computer-readable medium may send, propagate or transmit a program used by or used in conjunction with an instruction execution system, apparatus or device.

Program codes included in the computer-readable media may be transmitted by any suitable medium including, but not limited to, a wireless medium, a wire, an optical cable, a radio frequency (RF), or any suitable combination thereof.

Computer program codes for performing the operations of the present application may be written in one or more programming languages or a combination thereof. The programming languages include object-oriented programming languages such as Java, Smalltalk, and C++ and may further include conventional procedural programming languages such as "C" or similar programming languages. The program codes may be executed entirely on a user computer, executed partly on a user computer, executed as a stand-alone software package, executed partly on a user computer and partly on a remote computer, or executed entirely on a remote computer or a server. In the case where the remote computer is involved, the remote computer may be connected to the user computer through any type of network including a local area network (LAN) or a wide area network (WAN), or may be connected to an external computer (for example, via the Internet provided by an Internet service provider).

The preceding are example embodiments of the present application and are not intended to limit the scope of the present application.

It is to be understood by those skilled in the art that the term "user equipment" encompasses any suitable type of radio user device such as a mobile phone, a portable data processing apparatus, a portable web browser or an in-vehicle mobile station.

Generally speaking, embodiments of the present application may be implemented in hardware or special-purpose circuits, software, logic, or any combination thereof. For example, some aspects may be implemented in hardware while other aspects may be implemented in firmware or software executable by a controller, a microprocessor, or another computing apparatus, though the present application is not limited thereto.

Embodiments of the present application may be implemented through the execution of computer program instructions by a data processor of a mobile apparatus, for example, implemented in a processor entity, by hardware, or by a combination of software and hardware. The computer program instructions may be assembly instructions, instruction set architecture (ISA) instructions, machine instructions, machine-related instructions, microcodes, firmware instructions, status setting data, or source or object codes written in any combination of one or more programming languages.

A block diagram of any logic flow among the drawings of the present application may represent program steps, may represent interconnected logic circuits, modules, and functions, or may represent a combination of program steps and logic circuits, modules, and functions. Computer programs may be stored in a memory. The memory may be of any type suitable for a local technical environment and may be implemented using any suitable data storage technology, such as, but not limited to, a read-only memory (ROM), a random-access memory (RAM), or an optical memory device and system (for example, a digital video disc (DVD) or a compact disc (CD)). Computer-readable media may include non-transitory storage media. The data processor may be of any type suitable for the local technical environment, such as, but not limited to, a general-purpose computer, a special-purpose computer, a microprocessor, a digital signal processor (DSP), an application-specific integrated circuit (ASIC), a field-programmable gate array (FPGA), and a processor based on a multi-core processor architecture.

## Claims

1. A multicast information forwarding method, applied to a multicast information aggregation node and comprising:
receiving first aggregation information sent by a multicast source and second aggregation information sent by a multicast user, wherein the first aggregation information comprises multicast source information and Bit Index Explicit Replication (BIER) information of a network on a multicast source side, and the second aggregation information comprises multicast user information and BIER information of a network on a multicast user side;
creating a Bit Forwarding Egress Router (BFER) list of a BFER of a BIER sub-domain according to the first aggregation information and the second aggregation information and selecting a Bit Forwarding Ingress Router (BFIR) node of the BIER sub-domain; and
distributing the BFER list and the multicast source information to one of the following: the BFIR node, a multicast source server supporting BIER encapsulation, or a multicast-source-server-directly-connected device supporting BIER encapsulation to enable one of the following to encapsulate a BIER header according to the BFER list and forward the multicast source information to the multicast user: the BFIR node, the multicast source server supporting BIER encapsulation, or the multicast-source-server-directly-connected device supporting BIER encapsulation.

2. The method of claim 1, wherein receiving the first aggregation information sent by the multicast source and the second aggregation information sent by the multicast user comprises:
in response to determining that one multicast information aggregation node is deployed in the BIER sub-domain, receiving, by a target aggregation node, the first aggregation information and the second aggregation information separately, wherein the one multicast information aggregation node serves as the target aggregation node; or
in response to determining that a plurality of multicast information aggregation nodes are deployed in the BIER sub-domain, receiving, by a target aggregation node, the first aggregation information and the second aggregation information separately, wherein one of the plurality of multicast information aggregation nodes serves as the target aggregation node, and
wherein a network device in the BIER sub-domain communicates using one of the following manners: Quick User Datagram Protocol (UDP) Internet Connections (QUIC), Transmission Control Protocol (TCP), or User Datagram Protocol (UDP).

3. The method of claim 2, in response to determining that the plurality of multicast information aggregation nodes are deployed in the BIER sub-domain and comprise the target multicast information aggregation node and a first multicast information aggregation node, the method further comprises:
in response to determining that the target multicast information aggregation node receives the first aggregation information and the second aggregation information forwarded by the first multicast information aggregation node, parsing, by the target multicast information aggregation node, the first aggregation information and the second aggregation information to obtain a multicast information aggregation node identifier in the first aggregation information and a multicast information aggregation node identifier in the second aggregation information;
performing, by the target multicast information aggregation node, a path check on the first aggregation information and the second aggregation information separately according to the multicast information aggregation node identifier in the first aggregation information and the multicast information aggregation node identifier in the second aggregation information; and
in response to determining that the first aggregation information and the second aggregation information pass the path check, forwarding the first aggregation information and the second aggregation information to multicast information aggregation nodes in the BIER sub-domain other than the target multicast information aggregation node and the first multicast information aggregation node.

4. The method of claim 1, further comprising:
sending the multicast source information and a BFER selected for a particular user to the particular user or a directly connected device of the particular user to enable the particular user or the directly connected device of the particular user to send multicast information of Protocol Independent Multicast (PIM) or Internet Group Management Protocol (IGMP) to the BFER.

5. The method of claim 2, wherein receiving, by the target aggregation node, the first aggregation information and the second aggregation information separately comprises:
receiving, by the target aggregation node, the first aggregation information sent by a directly connected node of the multicast source and the second aggregation information sent by a directly connected node of the multicast user.

6. The method of claim 2, wherein receiving, by the target aggregation node, the first aggregation information and the second aggregation information separately comprises:
receiving, by the target aggregation node, the first aggregation information directly sent by the multicast source and the second aggregation information directly sent by the multicast user.

7. The method of claim 2, wherein receiving, by the target aggregation node, the first aggregation information and the second aggregation information separately comprises:
receiving, by the target aggregation node, the first aggregation information sent by a border node of the network on the multicast source side and the second aggregation information sent by a border node of the network on the multicast user side.

8. The method of claim 1, wherein the multicast source information comprises a multicast instance identifier, a multicast source address, a multicast group address, and a video bitrate; the BIER information of the network on the multicast source side is a first BIER information list; the first BIER information list comprises one or more BIER entries; and each of the one or more BIER entries comprises a keyword of the BIER sub-domain, a Bfr prefix, a Bfr-id, a BIER encapsulation capability of the multicast source, or a unicast metric from a BIER device in the BIER sub-domain to the multicast source; and
the multicast user information comprises a Virtual Private Network (VPN) identifier and a multicast group address; the BIER information of the network on the multicast user side is a second BIER information list; the second BIER information list comprises one or more BIER entries; and each of the one or more BIER entries comprises the BIER sub-domain (SD), the Bfr prefix, or the Bfr-id.

9. The method of claim 1, wherein creating the BFER list of the BFER of the BIER sub-domain according to the first aggregation information and the second aggregation information comprises:
extracting to-be-matched content from the multicast source information and the multicast user information separately, wherein the to-be-matched content comprises at least one of the following: a multicast instance, a multicast source address, a multicast group address, or a video bitrate; and
matching the multicast source information with the multicast user information according to the to-be-matched content in the multicast source information and the to-be-matched content in the multicast user information and creating the BFER list according to a match result.

10. The method of claim 9, wherein creating the BFER list according to the match result comprises:
in response to determining that the multicast source and the multicast user belong to a same BIER SD, creating the BFER list in the same BIER SD; or
in response to determining that the multicast source and the multicast user belong to different BIER SDs, creating the BFER list in the different BIER SDs.

11. A multicast information forwarding apparatus, comprising a receiving module, a creation module, and a forwarding module, wherein
the receiving module is configured to receive first aggregation information sent by a multicast source and second aggregation information sent by a multicast user, wherein the first aggregation information comprises multicast source information and Bit Index Explicit Replication (BIER) information of a network on a multicast source side, and the second aggregation information comprises multicast user information and BIER information of a network on a multicast user side;
the creation module is configured to create a Bit Forwarding Egress Router (BFER) list of a BFER of a BIER sub-domain according to the first aggregation information and the second aggregation information and select a Bit Forwarding Ingress Router (BFIR) node of the BIER sub-domain; and
the forwarding module is configured to distribute the BFER list and the multicast source information to one of the following: the BFIR node, a multicast source server supporting BIER encapsulation, or a multicast-source-server-directly-connected device supporting BIER encapsulation to enable one of the following to encapsulate a BIER header according to the BFER list and forward the multicast source information to the multicast user: the BFIR node, the multicast source server supporting BIER encapsulation, or the multicast-source-server-directly-connected device supporting BIER encapsulation.

12. A multicast information aggregation node, comprising:
one or more processors; and
a storage apparatus configured to store one or more programs,
wherein when executed by the one or more processors, the one or more programs cause the one or more processors to perform the method of any one of claims 1 to 10.

13. A storage medium storing a computer program which, when executed by a processor, causes the processor to perform the method of any one of claims 1 to 10.
